# EUROPEAN PATENT SPECIFICATION

(11) **EP 1 561 305 B1**
(45) Date of publication and mention of the grant of the patent: **07.12.2011**
(21) Application number: 02793561.8
(22) Date of filing: 30.12.2002
(51) Int. Cl.: H04W 48/18, H04L 12/28

(54) **APPARATUS AND METHOD FOR SEARCHING AP OF WIRELESS LAN BASED ON BROADCASTING INFORMATION OF BASE STATION IN MOBILE COMMUNICATION SYSTEM**
VORRICHTUNG UND VERFAHREN ZUMAP-DURCHSUCHEN EINES DRAHTLOSEN LAN AUF DER BASIS VON AUSGESTRAHLTENINFORMATIONEN DER BASISSTATION IN EINEM MOBILKOMMUNIKATIONSSYSTEM
PROCEDE ET DISPOSITIF DE RECHERCHE DE POINT D'ACCES DE RESEAU LOCAL RADIO SUR LA BASE D'INFORMATION DE DIFFUSION DE STATION DE BASE DANS UN SYSTEME DE COMMUNICATION MOBILE

(30) Priority: 15.11.2002 KR 2002071210
(43) Date of publication of application: 10.08.2005
(73) Proprietor: Electronics and Telecommunications Research Institute, Daejeon 305-350 (KR)
(72) Inventor: KIM, Jin Kyeong;, Seo-gu Daejeon 302-724 (KR); PARK, Nam Hoon, 305-755 Daejon (KR); KIM, Dae Sik, 305-755 Daejon (KR)
(74) Representative: Betten & Resch
(86) International application number: PCT/KR2002/002483
(87) International publication number: WO 2004/047372

(56) References cited:
- WO-A-01/22662
- JP-A- 2001 156 788
- US-A- 6 002 918
- US-A- 6 067 297
- US-B1- 6 400 961

## Description

### Technical Field

The present invention relates to an apparatus for automatically searching a wireless local area network (LAN) access point by using broadcast information and method thereof.

### Background Arts

A wireless LAN technology is a technology handling operations for accessing to a wired LAN through an air based on IEEE 802.3. The wireless LAN technology includes various technologies such as IEEE 802.11, IEEE 802.11b, IEEE 802.11a and IEEE 802.11g as standards. Recently, a direct sequence mode and CCK mode of wireless LAN according to IEEE 802.11b has been popular.

The wireless LAN is cooperated with a wired LAN according to various operation types such as a Bridge mode operation type for cooperating between the wireless LAN and the wired LAN by simply expanding a wired LAN to a wireless region. Furthermore, the wireless LAN is cooperated with the wired LAN by implementing additional protocols for authenticating of mobile stations, and receiving a public Internet Protocol IP address from a network and allocating private IP address to a mobile station in a Dynamic Host Configuration Protocol (DHCP) client and server function.

An, access point (AP) is a station having a wireless LAN relay function for accessing to mobile stations e.g., a personal data assistance and a notebook computer through the wireless LAN, and a wired LAN Hub functions by equipping a wired ports in the AP for accessing a printer and desktop personal computer through the wired LAN.

In a case of wireless LAN, a wireless communication is permitted to mobile stations that have been previously authenticated by registering a MAC ID of a network interface card (NIC) in the mobile station at a wireless LAN access point. Accordingly, a mobile station having unregistered MAC ID cannot access to the wireless LAN through a wireless LAN AP. The above mentioned management function is included in the wireless LAN AP for selectively using the management function. Furthermore, the wireless LAN AP having the management function can be controlled by using a browsing window of Internet explorer as a WEB mode. Therefore, a user can simply control various function of the wireless LAN AP.

Recently, a wireless communication service provider provides a data service through a mobile communication module based on IS-95 or 3G. However, the wireless communication services are not popular because a service fee is very expensive and data transmission speed is too slow. For overcoming such a disadvantage, a wireless LAN module is additionally equipped in a mobile station for receiving the data service in low price and high speed in an area where the wireless LAN AP is located by using the wireless LAN module instead of using the mobile communication module.

For determining whether or not there is an active wireless LAN access points existed, the wireless LAN module must search a beacon signal transmitted form the active wireless LAN AP. In a case of finding the beacon signal, the mobile station can have data service through corresponding wireless LAN AP. The wireless LAN AP has a limitation to provide data service within its service area. Therefore, the mobile station located out of the service area of the wireless LAN AP must use the mobile communication module to receive the data service.

As mentioned above, the mobile station having both the mobile communication module and the wireless LAN module must continuously search a beacon signal for finding the wireless LAN AP. On the other hand, the wireless LAN AP is not installed in everywhere. The wireless LAN AP is only installed in a place where many users of wireless data service frequently get together. Therefore, in a location of no wireless LAN AP installed, the mobile station having wireless LAN module wastes an electric power to search the beacon signal.

For eliminating the above problem, the user can manually control to start and stop to search the beacon signal according to user's decision. However, it makes the user inconvenient.

Accordingly, the users have been remanding a method for automatically searching the beacon signal without considering high power consumption problem in a case that a user of the mobile station having both the mobile communication module and the wireless LAN module wants to receives wireless data service through the wireless LAN AP.

US-B1-6 400 961 discloses a method and an apparatus for saving power in a multi-mode, e.g. GSM and DECT, mobile communication terminal, in which the mobile terminal can receive information in each cell of the GSM network as to how well the GSM cell is covered by DECT picocells, so that the mobile terminal can save power by switching off its DECT module if DECT picocell is found within the GSM cell.

WO-A-01/22662 discloses that a WLAN module and a mobile communication module are provided in one mobile station so that the mobile stastoin can switch between the two kinds of networks, a WLAN and a mobile communication network.

### Disclosure of the Invention

It is, therefore, an object of the present invention to provide an apparatus for automatically searching a wireless LAN access point based on broadcast information of a base station in order to prevent high power consumption by operating a wireless LAN module in only case that a mobile station is located within a service area of a wireless LAN access point, and method thereof.

In accordance with an aspect of the present invention, there is provided an apparatus for searching an access point of a mobile terminal, the apparatus includes: a wireless LAN service determination unit for determining whether or not there is an access point of wireless LAN providing wireless data service based on broadcasting information transmitted within a service area of a base station; and a wireless LAN service unit for searching a beacon signal transmitted from the access point of the wireless LAN according to the determination result of the wireless LAN service determination unit and receiving wireless data service from the access point of the wireless LAN based on the beacon signal.

In accordance with an aspect of the present invention, there is also provided a method, being implemented to a wireless LAN access point searching apparatus, for searching an access point, the method including the steps of: a) obtaining broadcasting information, provided within a service area of a base station, by a mobile communication module of a mobile station; b) determining whether or not there is the wireless LAN access point providing services based on the obtained broadcasting information; and c) receiving wireless data service from the wireless LAN access point by using a wireless LAN module which searches periodically transmitted beacon signal of the wireless LAN access point in case there is the wireless LAN access point is existed.

In accordance with an aspect of the present invention, there is provided a computer readable recoding medium having executable instructions for implementing a method for searching an access point, the method including the steps of: a) obtaining broadcasting information, provided within a service area of a base station, by a mobile communication module of a mobile station; b) determining whether or not there is the wireless LAN access point providing services based on the obtained broadcasting information; and c) receiving wireless data service from the wireless LAN access point by using a wireless LAN module which searches periodically transmitted beacon signal of the wireless LAN access point in case there is the wireless LAN access point is existed.

### Brief Description of the Drawings

The above and other objects and features of the present invention will become apparent from the following description of the preferred embodiments give in conjunction with the accompanying drawings, in which:
Fig. 1 is a conceptual view illustrating conventional steps of searching a beacon signal of a wireless LAN access point AP;
Fig. 2 is a diagram showing an apparatus for automatically searching a wireless access point by using broadcast information of a base station in accordance with a preferred embodiment of the present invention;
Fig. 3 is a conceptual view for explaining a method for automatic searching a wireless LAN access point AP by using broadcast information of a base station in accordance with a preferred embodiment of the present invention;
Fig. 4 is a structure of broadcast information transmitted from a base station in accordance with a preferred embodiment of the present invention; and
Fig. 5A and 5B is a view for explaining steps for arranging base stations for improving efficiency of a method automatically searching a wireless LAN access point in accordance with a preferred embodiment of the present invention.

### Modes for carrying out the Invention

Other objects and aspects of the invention will become apparent from the following description of the embodiments with reference to the accompanying drawings, which is set forth hereinafter.

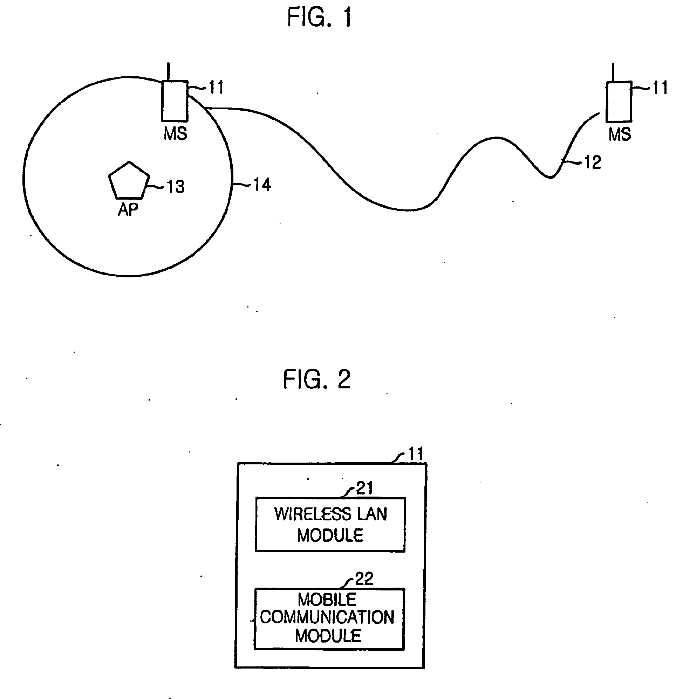

Fig. 1 is a conceptual view illustrating conventional steps of searching a beacon signal of a wireless LAN access point AP. Fig. 1 shows that conventional steps for continually searching the beacon signal of the wireless LAN access point AP while the mobile station MS having a wireless LAN module is moving around.

As shown, the mobile station MS 11 must reach a service area of the wireLess LAN access point AP 13 through paths 12 for receiving wireless data service transmitted from the wireless LAN access point 13. That is, the MS 11 must reach the service area 14 of the access point 13 in which the MS 11 can find a beacon signal.

Fig. 2 is a diagram illustrating an apparatus for automatically searching a wireless access point by using broadcast information of a base station in accordance with a preferred embodiment of the present invention.

As shown, the apparatus for automatically searching a wireless access point includes, a mobile communication module 22 and a wireless LAN module 21. The mobile communication module is used for determining whether or not there is a wireless LAN access point transmitting wireless data services based on the broadcast information transmitted within a service area of the base station. The wireless LAN module is used for receiving the wireless data service through the wireless LAN access point by searching the beacon signal transmitted from near wireless LAN access point according to the determination result of the mobile communication module 22.

The mobile station MS 11 of the present invention includes both the wireless LAN module 21 and the mobile communication module 22 and various kind of mobile stations can be used as the mobile station MS 11 of the present invention such as a cellular phone, a PCS phone, a next generation terminal capable of processing in international mobile telecommunication IMT 2000 and universal mobile telecommunication service, and personal digital assistants.

The wireless LAN module 21 performs a wireless LAN accessing function e.g., IEEE 842.11b/a and the mobile communication module 22 performs a determination function by receiving the broadcast information from the base station, determining whether or not presence of wireless LAN AP and providing determination result to the MS 11.

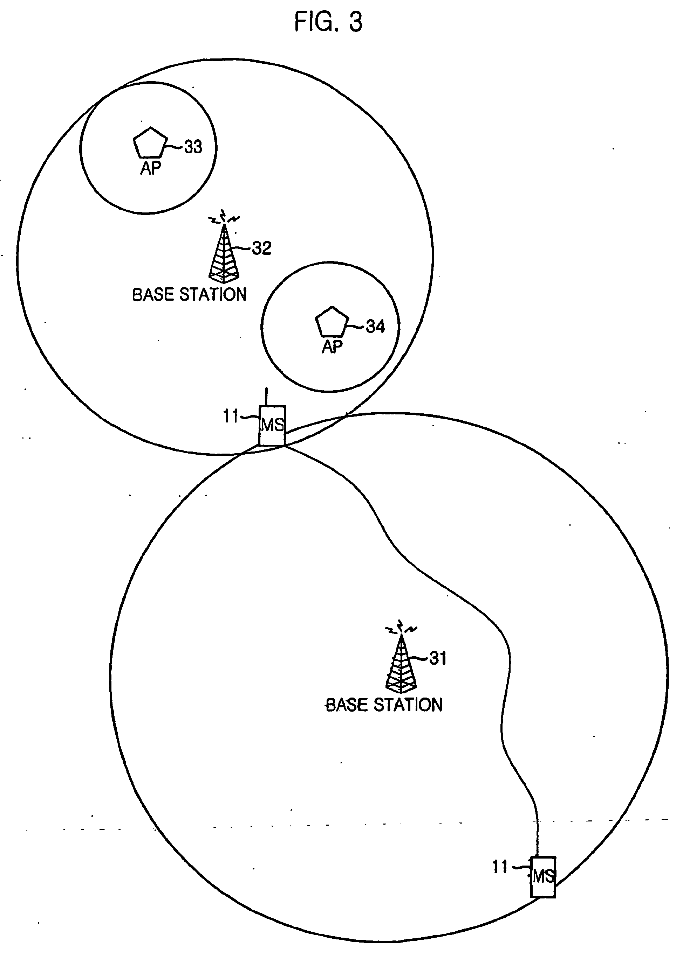

Fig. 3 is a conceptual view for explaining a method for automatic searching a wireless LAN access point AP by using broadcast information of a base station in accordance with a preferred embodiment of the present invention.

If a mobile station MS 11 is located within a service area of a base station 31, the MS 11 receives the broadcast information by using a mobile communication module 22 and determines whether or not there is the wireless LAN access point transmitting wireless data service.

In case of Fig. 3, there is not the access point within the service area of the base station 31 and the MS 11 does not search the wireless LAN AP by the wireless LAN module 21.

If the MS 11 enters a service area of base station 32, broadcast information of the base station 32 is received by using the mobile communication module 22. After receiving the broadcast information, the MS 11 determines whether or not there is wireless LAN AP based on the broadcast information. Since there are the wireless LAN APs 33 and 34, the MS 11 starts to search a beacon signal periodically transmitted from the wireless AP 33 and 34 by using the wireless LAN module. If the MS 11 finds the beacon signal from AP 33 and 34, the MS 11 receives wireless data service transmitted from the AP 33 and 34.

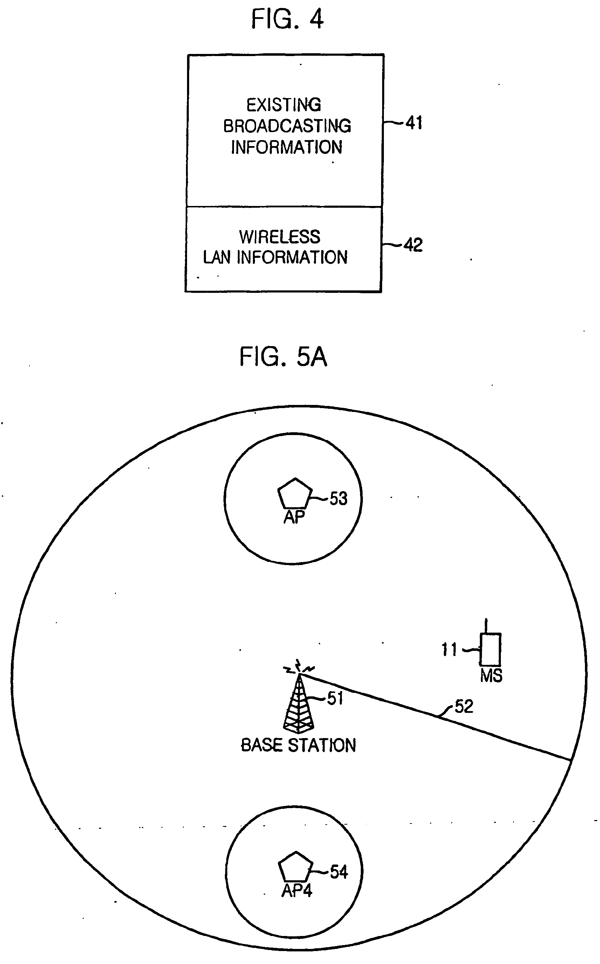

Fig. 4 is a structure of broadcast information transmitted from a base station in accordance with a preferred embodiment of the present invention.

The base station additionally inserts information indicating presence of wireless LAN access point AP in to conventional broadcast information for noticing presence of the wireless LAN access point AP to the MS 11. The broadcast information is periodically broadcasted to all MS 11 entering the service area of the base station.

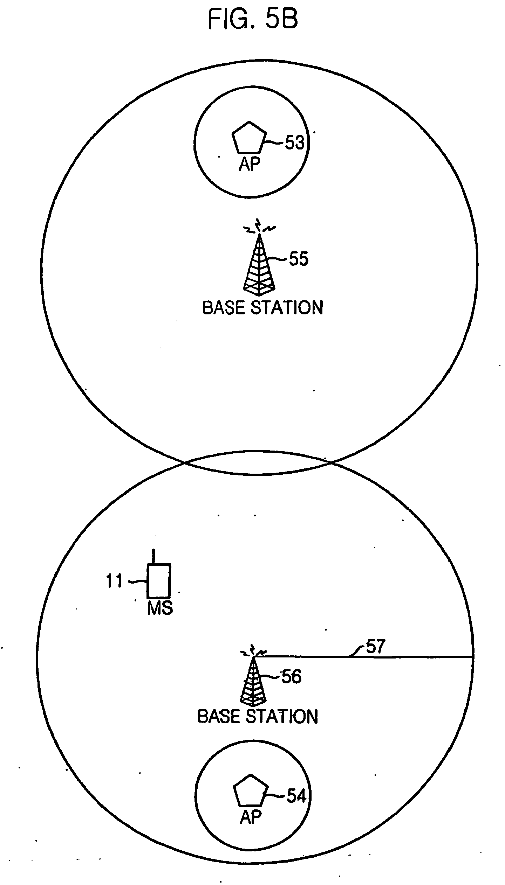

Fig. 5A and 5B is a view for explaining steps for arranging base stations for automatically searching a wireless LAN access point in accordance with a preferred embodiment of the present invention. It is an example of arrangement of base station to improving efficiency of the present invention.

As shown in Fig. 5A, a base station 51 has comparatively wide service area and includes two wireless LAN access points 53 and 54. Accordingly, a mobile station 11 receiving broadcast information from the base station 51 must search wide service area of the base station 51 for finding the wireless LAN access points 53 and 54. Therefore, it is possible to fail for finding the wireless LAN access points 53 and 54 and a wireless LAN module 21 of the mobile station 51 must use large amount of power to search the wireless LAN access points. It is not effective method for finding the wireless LAN access points in such a wide service area.

As shown in Fig. 5B, base stations 55 and 56 are individually installed based on a service area of the wireless LAN access points 53 and 54 by setting a comparative small service area into the base stations 55 and 56 in order to improve efficiency of the present invention. That is, the mobile station 11 search a service area 57 of the base station 56 which is smaller comparing to the service area 52 of the base station 51 in case that the mobile station 51 is located within the service area of the base station 56 by individually installing the base station 55 for the wireless LAN access point 53 and installing the base station 56 for the wireless LAN access point 54. As a result, the mobile station 11 uses less power to find the wireless LAN access point comparing a case of Fig. 5A.

As mentioned above, the preset invention can be implemented as computer executable instructions and can be stored in a computer readable recoding medium such as a CD-ROM, RAM, ROM, floppy disk, hard disk and optical magnetic disk.

As mentioned above, the present invention determines presence of wireless LAN access point based on broadcast information provided from a base station by using a mobile communication module and tries to receive wireless LAN services when there is the wireless LAN access point existed. Therefore, the present invention can eliminate high power consumption problem wasted by the wireless LAN module for frequently searching the wireless LAN access point. Furthermore, a method for automatically searching the wireless LAN access point can be provided without considering high power consumption problem by the present invention.

While the present invention has been described with respect to certain preferred embodiments, it will be apparent to those skilled in the art that various changes and modifications may be made without departing from the scope of the invention as defined in the following claims.

## Claims

1. An apparatus for searching an access point of a mobile station (11), the apparatus comprising:
wireless LAN service determination means for determining whether or not there is an access point (13, 33, 34, 53, 54) of a wireless LAN providing wireless data service based on broadcasting information transmitted within a service area (62,67) of a base station (31, 32, 51, 55, 56): and
wireless LAN service means for searching a beacon signal transmitted from the access point (13, 33, 34, 53, 54) of the wireless LAN according to the determination result of the wireless LAN service determination means and receiving the wireless data service from the access point (13, 33, 34, 53, 54) of the wireless LAN based on the beacon signal.

2. The apparatus as recited in claim 1, wherein the mobile station is a dual mode mobile station (11) having a wireless LAN module on and a mobile communication module (22).

3. The apparatus as recited in claim 1, wherein the base station (31, 32, 51, 55, 56) is installed by setting predetermined service area (57) based on a location in which the access point exists.

4. A method for searching an access point in a mobile station (11), the method comprising the steps of:
a) obtaining broadcasting information, transmitted within a service area of a base station (31, 32, 51, 55, 56), by using a mobile communication module (22) of a the mobile station (11);
b) determining whether or not there is the wireless LAN access point (13, 33, 34, 53, 54) providing services based on the obtained broadcasting information: and
c) receiving wireless data service from the wireless LAN access point (13, 33, 34, 53, 54) by using a wireless LAN module (21) which searches periodically transmitted beacon signal of the wireless LAN access point (13, 33,_ 34, 53, 54) in case there is the wireless LAN access point exists.

5. The method as recited in claim 4, wherein the broadcasting information includes information indicating presence of wireless LAN access point (13, 33, 34, 53, 54) and is periodically broadcasted to all mobile stations (11) in a service area of the base station(31, 32, 51, 55, 56).

6. A computer readable recoding medium having executable instructions for implementing a method for searching an access point in a mobile station(11), the method comprising the steps of:
a) obtaining broadcasting information, provided within a service area of a base station(31, 32, 51, 55, 56), by a mobile communication module (22) of a the mobile station (11);
b) determining whether or not there is the wireless LAN access point (13, 33, 34, 53, 54) providing services based on the obtained broadcasting information; and
c) receiving wireless data service from the wireless LAN access point (13, 33, 34, 53, 54) by using a wireless LAN module (21) which searches periodically transmitted beacon signal of the wireless LAN access point (13, 33, 34, 53, 54) in case there is the wireless LAN access point exists.

7. The apparatus as recited in claim 1, wherein the broadcasting information transmitted from the base station includes a conventional broadcast information (41) and information (42) indicating presence of the wireless LAN access point.

8. The method as recited in claim 4, wherein the broadcasting information transmitted from the base station includes a conventional broadcast information (41) and information (42) indicating presence of the wireless LAN access point.

## Patentansprüche

1. Eine Vorrichtung zum Suchen eines Zugriffspunkts einer mobilen Station (11), wobei die Vorrichtung aufweist:
eine Wireless-LAN-Service-Bestimmungseinrichtung zum Bestimmen, ob es einen Zugriffspunkt (13, 33, 34, 53, 54) eines Wireless-LAN gibt, der drahtlosen Datenservice anbietet basierend auf dem Broadcasten von Informationen, die innerhalb eines Servicegebiets (52, 57) einer Basisstation (31, 32, 51, 55, 56) übertragen werden; und
eine Wireless-LAN-Service-Einrichtung zum Suchen eines Bakensignals, das von dem Zugriffspunkt (13, 33, 34, 53, 54) des Wireless-LAN übertragen wird, und zwar gemäß dem Bestimmungsergebnis der Wireless-LAN-Service-Bestimmungseinrichtung, und zum Empfangen des drahtlosen Datenservice von dem Zugriffspunkt (13, 33, 34, 53, 54) des Wireless-LAN basierend auf dem Bakensignal.

2. Die Vorrichtung nach Anspruch 1, wobei die Mobilstation eine Mobilstation (11) mit zwei Modi ist, die ein Wireless-LAN-Modul (21) und ein mobiles Kommunikationsmodul (22) aufweist.

3. Die Vorrichtung nach Anspruch 1, wobei die Basisstation (31, 32, 51, 55, 56) installiert wird durch Setzen eines vorbestimmten Servicegebiets (57), basierend auf einem Ort, in dem der Zugriffspunkt existiert.

4. Ein Verfahren zum Suchen eines Zugriffspunkts in einer Mobilstation (11), wobei das Verfahren die folgenden Schritte aufweist:
a) Erhalten von Broadcast-Information, die innerhalb eines Servicegebiets einer Basisstation (31, 32, 51, 55, 56) übertragen wird, durch Verwendung eines mobilen Kommunikationsmoduls (22) der Mobilstation (11);
b) Ermitteln, ob ein Wireless-LAN-Zugriffspunkt (13, 33, 34, 53, 54) existiert oder nicht, der Services liefert, basierend auf der erhaltenen Broadcast-Information; und
c) Empfangen von drahtlosem Datenservice von dem Wireless-LAN-Zugriffspunkt (13, 33, 34, 53, 54) durch Verwendung eines Wireless-LAN-Moduls (21), das periodisch übertragenes Bakensignal des Wireless-LAN-Zugriffspunkts (13, 33, 34, 53, 54) sucht, für den Fall, dass der Wireless-LAN-Zugriffspunkt existiert.

5. Das Verfahren nach Anspruch 4, wobei die Broadcast-Information Information einschließt, die das Vorhandensein eines Wireless-LAN-Zugriffspunkts (13, 33, 34, 53, 54) angibt und periodisch zu allen Mobilstationen (11) in einem Servicegebiet der Basisstation (31, 32, 51, 55, 56) gebroadcastet wird.

6. Ein computerlesbares Aufzeichnungsmedium aufweisend ausführbare Instruktionen zum Implementieren eines Verfahrens zum Suchen eines Zugriffspunkts in einer Mobilstation (11), wobei das Verfahren die folgenden Schritte aufweist:
a) Erhalten von Broadcast-Information, die innerhalb eines Servicegebiets einer Basisstation (31, 32, 51, 55, 56) übertragen wird, durch ein mobiles Kommunikationsmodul (22) der Mobilstation (11);
b) Ermitteln, ob ein Wireless-LAN-Zugriffspunkt (13, 33, 34, 53, 54) existiert oder nicht, der Services liefert, basierend auf der erhaltenen Broadcast-Information; und
c) Empfangen von drahtlosem Datenservice von dem Wireless-LAN-Zugriffspunkt (13, 33, 34, 53, 54) durch Verwendung eines Wireless-LAN-Moduls (21), das periodisch übertragenes Bakensignal des Wireless-LAN-Zugriffspunkts (13, 33, 34, 53, 54) sucht, für den Fall, dass der Wireless-LAN-Zugriffspunkt existiert.

7. Die Vorrichtung nach Anspruch 1, wobei die Broadcast-Information, die von der Basisstation übertragen wird, eine herkömmliche Broadcast-Information (41) aufweist sowie Information (42), die das Vorhandensein des Wireless-LAN-Zugriffspunkts angibt.

8. Das Verfahren nach Anspruch 4, wobei die Broadcast-Information, die von der Basisstation übertragen wird, eine herkömmliche Broadcast-Information (41) einschließt und Information (42), die das Vorhandensein des Wireless-LAN-Zugriffspunkts angibt.

## Revendications

1. Appareil de recherche d'un point d'accès d'une station mobile (11), l'appareil comprenant :
un moyen de détermination de service de réseau local (LAN) sans fil pour déterminer s'il y a ou s'il n'y a pas un point d'accès (13, 33, 34, 53, 54) d'un réseau local sans fil en fournissant un service de données sans fil sur la base d'informations de diffusion transmises dans une zone de service (52, 57) d'une station de base (31, 32, 51, 55, 56) ; et
un moyen de service de réseau local sans fil pour rechercher un signal de balise transmis par le point d'accès (13, 33, 34, 53, 54) de réseau local sans fil selon le résultat de détermination obtenu par le moyen de détermination de service de réseau local sans fil et recevant le service de données sans fil depuis le point d'accès (13, 33, 34, 53, 54) de réseau local sans fil en se basant sur le signal de balise.

2. Appareil selon la revendication 1, dans lequel la station mobile est une station mobile bimode (11) ayant un module de réseau local sans fil (21) et un module de communication mobile (22).

3. Appareil selon la revendication 1, dans lequel la station de base (31, 32, 51, 55, 56) est installée en plaçant une zone de service (57) prédéterminée en se basant sur un lieu où le point d'accès existe.

4. Procédé de recherche d'un point d'accès dans une station mobile (11), le procédé comprenant les étapes consistant à :
a) obtenir des informations de diffusion, transmises à l'intérieur d'une zone de service d'une station de base (31, 32, 51, 55, 56) en utilisant un module de communication mobile (22) de la station mobile (11) ;
b) déterminer s'il y a ou s'il n'y a pas de point d'accès de réseau local sans fil (13, 33, 34, 53, 54) fournissant des services en se basant sur les informations de diffusion obtenues ; et
c) recevoir un service de données sans fil à partir du point d'accès de réseau local sans fil (13, 33, 34, 53, 54) en utilisant un module de réseau local sans fil (21) recherchant les signaux de balise transmis périodiquement du point d'accès de réseau sans fil (13, 33, 34, 53, 54) dans le cas où le point d'accès de réseau mobile sans fil existe.

5. Procédé selon la revendication 4, dans lequel les informations de diffusion comprennent des informations indiquant la présence de point d'accès de réseau local sans fil (13, 33, 34, 53, 54) et sont diffusées périodiquement à toutes les stations mobiles (11) dans une zone de service de la station de base (31, 32, 51, 55, 56).

6. Support d'enregistrement lisible par ordinateur ayant des instructions exécutables pour implémenter un procédé de recherche d'un point d'accès dans une station mobile (11), le procédé comprenant les étapes consistant à :
a) obtenir des informations de diffusion, fournies dans une zone de service d'une station de base (31, 32, 51, 55, 56) par un module de communication mobile (22) de la station mobile (11) ;
b) déterminer s'il y a ou s'il n'y a pas de point d'accès de réseau mobile sans fil (13, 33, 34, 53, 54) fournissant des services en se basant sur les informations de diffusion obtenues ; et
c) recevoir un service de données sans fil à partir du point d'accès de réseau mobile sans fil (13, 33, 34, 53, 54) en utilisant un module réseau mobile sans fil (21) qui cherche des signaux de balise transmis périodiquement du point d'accès de réseau mobile sans fil (13, 33, 34, 53, 54) dans le cas où le point d'accès de réseau mobile sans fil existe.

7. Appareil selon la revendication 1, dans lequel les informations de diffusion transmises à partir de la station de base comprennent des informations de diffusion conventionnelles (41) et des informations (42) indiquant la présence d'un point d'accès de réseau local sans fil.

8. Procédé selon la revendication 4, dans lequel les informations de diffusion transmises à partir de la station de base comprennent des informations de diffusion conventionnelles (41) et des informations (42) indiquant la présence du point d'accès de réseau local sans fil.
